(19) Europäisches Patentamt
European Patent Office
Office européen des brevets

(11) EP 0 669 340 B1

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(51) Int Cl.7: **C07F 17/00**, C07F 7/22
// C08F10/00

(21) Anmeldenummer: **94112299.6**

(22) Anmeldetag: **05.08.1994**

(54) **Verfahren zur Herstellung von verbrückten stereorigiden Metallocenen**

Process for the preparation of bridged stereorigid metallocenes

Procédé de préparation de metallocènes pontés stéréorigides

(84) Benannte Vertragsstaaten:
**AT BE CH DE ES FR GB GR IT LI NL PT SE**

(30) Priorität: **25.02.1994 DE 4406109**

(43) Veröffentlichungstag der Anmeldung:
**30.08.1995 Patentblatt 1995/35**

(73) Patentinhaber: **Crompton GmbH**
**59192 Bergkamen (DE)**

(72) Erfinder: **Lisowsky, Richard, Dr.**
**D-59174 Kamen (DE)**

(56) Entgegenhaltungen:
**EP-A- 0 344 887**
**EP-A- 0 537 686**
**US-A- 3 306 917**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der Erfindung ist ein neues verbessertes Verfahren zur Herstellung von verbrückten stereorigiden Metallocenen über magnesium- und zinnorganische Verbindungen.

Metallocene auf Basis von Cyclopentadien, Inden und Fluoren sind in Kombination mit speziellen Co-Katalysatoren, wie beispielsweise Aluminoxanen oder Tetraphenylborat-Komplexen, hochaktive und bei geeignetem Ligandensystem auch stereospezifische Katalysatorsysteme zur Polymerisation von Olefinen.

Diese Katalysatoren, Verfahren zu ihrer Herstellung sowie ihre Verwendung sind in den EP-A-0 480 390, EP-A-0 413 326, EP-A-0 530 908, EP-A-0 344 887, EP-A-0 420 436, EP-A-0 416 815, EP-A-0 520 732 eingehend beschrieben.

Die dort genannten Verbindungen werden weitgehend hergestellt nach dem z. B. in der EP-A-0 480 390 Seite 5 angegebenen Reaktionsschema. Hierbei werden die Cyclopentadienyl-derivate mit Lithiumalkylen metalliert, anschließend mit Alkyldihalogeniden oder Alkylditosylaten zu den verbrückten Ligandensystemen umgesetzt und dann in einer folgenden Stufe abermals mit Lithiumalkylen zu den entsprechenden dimetallierten Verbindungen umgesetzt, welche dann mit Übergangsmetallhalogeniden zu den verbrückten Metallocenen reagieren (J. Organomet. Chem., 1985, 288, 63; J. Organomet. Chem., 1988, 342, 21).

Diese Verfahren weisen eine Reihe von Nachteilen auf:

- mehrstufige Synthesen, bei denen zum Teil die Zwischenstufen isoliert und gereinigt werden müssen,
- Durchführung einzelner Reaktionsstufen notwendigerweise bei Temperaturen $\leq$-56 °C,
- Einsatz sicherheits- und/oder umweltrelevant nicht unproblematischer Lösungsmittel wie Ether, Hexamethylphosphorsäuretriamid (HMPA), Methylenchlorid oder Chloroform,
- Trennverfahren (z. B. Extraktionen), insbesondere in der letzten Stufe, die in Verbindung mit den Stoffeigenschaften der Produkte (Schwerlöslichkeit, extrem empfindlich gegenüber Luft- und Feuchtigkeitsspuren) und der abzutrennenden Salze (z. B. LiCl) technisch nur unter hohem Aufwand durchzuführen sind und zu hohen Ausbeuteverlusten beitragen,
- gezielte Beeinflussung des rac : meso-Verhältnisses während der Synthese bei Verbindungen, die aufgrund der Ligandensubstitution prinzipiell in einer Racemat(rac)(zwei Enantiomere) und einer Meso-Form anfallen können, ist nicht generell möglich (bisher konnte nur durch Arbeiten bei -56 °C in einigen Einzelfällen die Bildung der Meso-Verbindung verringert oder verhindert werden),
- nur geringe Ausbeuten an gewünschtem Metallocen, insbesondere über alle Stufen gerechnet.

Daher besteht ein steigendes Interesse an der Bereitstellung geeigneter, insbesondere auch für technische Mengen problemlos anwendbarer, genereller Syntheseverfahren, die in hohen Ausbeuten möglichst kostengünstig solche Übergangsmetallkomplexe zu liefern in der Lage sind.

Eine Aufgabe der Erfindung war es, Syntheseverfahren zu entwickeln, welche es gestatten, unter Vermeidung der geschilderten Nachteile in hohen Ausbeuten, wahlweise mit oder vorzugsweise ohne Isolierung der Zwischenstufen, sowie technisch problemlos durchführbar, verbrückte stereorigide Metallocene herzustellen.

Es wurde nun gefunden, daß unter Einsatz von Dialkylmagnesiumverbindungen sowohl der Aufbau von verbrückten Ligandensystemen in hohen Ausbeuten unter technisch vorteilhaften Reaktionsbedingungen gelingt, als auch die für die optimalen, weiteren Umsetzungen besonders geeigneten Magnesium- und Zinnderivate dieser Ligandensysteme in hohen Ausbeuten in einem Eintopfverfahren erhältlich und direkt zu den gewünschten Metallocenen umsetzbar sind.

Weiterhin wurde überraschend gefunden, daß bei Umsetzungen von Liganden, die aufgrund ihrer Substitution zur Bildung von stereoisomeren Produkten (racemat (rac) : meso-Verbindungen) geeignet sind, zu Metallocenen die Beeinflussung des rac : meso-Produktverhältnisses in weiten Grenzen durch die Reaktionsführung möglich ist.

Gegenstand der Erfindung ist ein Verfahren zur Herstellung von verbrückten, stereorigiden Metallocenen der allgemeinen Formel (1)

$$Q(CpRa)(Cp'R'a')M(X)_n \qquad (1)$$

worin

| | |
|---|---|
| Cp = | ein Cyclopentadienyl-, ein Indenyl-, ein Fluorenylrest |
| R, R' = | gleich oder verschieden Alkyl-, Phosphin-, Amin-, Alkylether- oder Aryl-ethergruppen mit $0 \leq a \leq 4$, $0 \leq a' \leq 4$ |
| Cp' = | eine der Gruppen Cp oder |
| Cp' = | - NR"- mit R" = Alkyl- oder Arylrest mit a = 1 und |
| Q = | eine ein- oder mehrgliedrige Brücke |

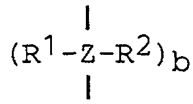

zwischen Cp und Cp' ist, worin $R^1$ und $R^2$ gleich oder verschieden ein Wasserstoffatom, eine $C_1$-$C_{10}$-Alkylgruppe, eine $C_6$-$C_{10}$-Arylgruppe und Z Kohlenstoff, Silizium oder Germanium bedeutet mit b = 0,1, 2 oder 3

| | |
|---|---|
| M = | ein Übergangsmetall der Gruppen 3 bis 6 (IUPAC Notation), insbesondere Zr, Hf ist |
| X = | Halogen, insbesondere Cl, Br ist und |
| n = | der Oxidationszahl von M, vermindert um 2, entspricht, |

welches dadurch gekennzeichnet ist, daß in erster Stufe

1) Cyclopentadienylverbindungen CpRa mit Magnesiumverbindungen $(R^3R^4)_cMg$, worin $R^3R^4$ gleich oder verschieden, H, $C_1$-$C_{12}$-Alkylreste und c = 0 oder 1 ist, nach der allgemeinen Gleichung umgesetzt werden

$$2CpRa + (R^3R^4)_cMg \rightarrow (CpRa)_2Mg + (cR^3)H + (cR^4)H$$

und das Reaktionsprodukt in zweiter Stufe

2) mit Verbindungen $X^1QX^2$, worin $X^1$, $X^2$ gleich oder verschieden Cl, Br, J, $-OSO_2R^5$, worin $R^5$ ein Alkylrest mit 1 - 10 C-Atomen oder ein Arylrest mit 6 - 10 C-Atomen sein kann, nach der allgemeinen Gleichung umgesetzt wird

$$(CpRa)_2Mg + X^1QX^2 \rightarrow (CpRa)_2Q + MgX^1X^2$$

und das Reaktionsprodukt in dritter Stufe

3) mit Magnesiumverbindungen $(R^3R^4)_cMg$ nach der allgemeinen Gleichung umgesetzt wird

$$(CpRa)_2Q + (R^3R^4)_cMg \rightarrow Q(CpRa)_2Mg + (cR^3)H + (cR^4)H$$

oder

$$(CpRa)\ (Cp'R'a')Q + (R^3R^4)_cMg \rightarrow Q\ (CpRa)\ (Cp'R'a')Mg +$$

$$(cR^3)H + (cR^4)H$$

und das Reaktionsprodukt in vierter Stufe

4) mit Zinnverbindungen $R^6_{4-k}\ SnX^3_k$, worin $R^6$ ein $C_2$-$C_{20}$-Alkylrest, insbesondere $C_4$-$C_8$-Alkylrest oder ein $C_6$-$C_{10}$-Arylrest ist, $X^3$ ein Halogenatom, insbesondere Cl, Br und k = 1 - 4 ist, nach der allgemeinen Gleichung

$$Q(CpRa)_2Mg + 2\ R^6{}_{4-k}SnX^3{}_k \rightarrow$$

$$Q(CpRa)_2(SnX^3{}_{k-1}R^6{}_{4-k})_2 + MgX^3 2$$

oder

$$Q(CpRa)(Cp'R'a')\,Mg + 2\,R^6{}_{4-k}SnX^3{}_k \rightarrow$$

$$Q(CpRa)(Cp'R'a')(SnX^3{}_{k-1}R^6{}_{4-k})_2 + MgX^3 2$$

umgesetzt wird und das Reaktionsprodukt in fünfter Stufe

5) mit Übergangsmetallhalogeniden der Formel $M(X)_m$, worin m gleich der Oxidationszahl von M ist, nach der Gleichung

$$Q(CpRa)_2(SnX^3{}_{k-1}R^6{}_{4-k})_2 + M(X)_m \rightarrow$$

$$Q(CpRa)_2M(X)_n + 2\,SnX^3{}_{k-1}X^6{}_{4-k}$$

oder

$$Q(CpRa)\,(Cp'R'a)\,(SnX^3{}_{k-1}R^6{}_{4-k})_2 + M(X)_m \rightarrow$$

$$Q(CpRa)\,(Cp'R'a')\,M(X)_n + 2SnX^3{}_{k-1}XR^6{}_{4-k}$$

umgesetzt wird.

Ein weiterer Gegenstand der Erfindung ist dadurch gekennzeichnet, daß die Reaktionsprodukte der Zwischenstufen ohne Isolierung direkt für die weitere Umsetzung der jeweiligen Folgestufen eingesetzt werden.
Ein weiterer Gegenstand der Erfindung sind Verbindungen der allgemeinen Formel

$$Q(CpRa)(Cp'R'a')(SnX^3{}_{k-1}R^6{}_{4-k})_2$$

worin bedeuten

Q = eine ein- oder mehrgliedrige Brücke

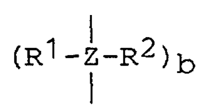

zwischen Cp und Cp' ist, worin $R^1$ und $R^2$ gleich oder verschieden ein Wasserstoffatom, eine $C_1$-$C_{10}$-Alkylgruppe, eine $C_6$-$C_{10}$-Arylgruppe und Z Kohlenstoff, Silizium oder Germanium bedeutet mit b = 0,1, 2 oder 3

Cp, Cp' = Cyclopentadienyl-, ein Indenyl-, ein Fluorenylrest
R, R' = Alkyl-, Phosphin-, Amin- Alkylether-, oder Arylethergruppen mit $0 \leq a, a' \leq 4$
$R^6$ = ein $C_2$-$C_{20}$-Alkylrest, ein $C_6$-$C_{10}$-Arylrest
$X^3$ = ein Halogenatom
Z = Kohlenstoff, Silizium oder Germanium mit b = 1, 2 oder 3.

Die weiteren Gegenstände der Erfindung sind durch die Ansprüche gekennzeichnet.
Die erfindungsgemäß für die Stufe 1. einsetzbaren Cyclopentadienylverbindungen CpRa gehören zum bekannten Stand der Technik und sind Verbindungen, in welchen Cp ein Cyclopentadienylrest oder ein Indenylrest und R Alkyl-, Phosphin-, Amin-, Alkylether- oder Arylethergruppen mit $0 \leq a \leq 4$ sein können. Der Substituent R am Cp-Rest

kann gleich oder verschieden sein. Erfindungsgemäß bevorzugt sind Verbindungen, in welchen R Alkylreste mit 1 - 6 C-Atomen sind und a = 0 bis 4 ist.

Als Verbindungen $(R^3R^4)_cMg$ werden solche eingesetzt, in denen $R^3$ und $R^4$ gleich oder verschieden H, $C_{1-12}$-Alkylreste sind und c = 1 ist. Erfindungsgemäß werden bevorzugt Butylethylmagnesium, Di-n-butylmagnesium, Di-n-hexylmagnesium, n-Butyl-sec-butylmagnesium in ihren handelsüblichen Formulierungen, wie insbesondere BOMAG®-A der Firma Witco GmbH (Butyl-octyl-magnesium 20 %ig in Heptan).

Die Umsetzungen erfolgen in Inertgasatmosphäre. Hierbei werden erfindungsgemäß bevorzugt die Komponenten bei Raumtemperatur in einem inerten Lösungsmittel vorgelegt und die Temperatur unter intensivem Rühren erhöht.

Als inerte Lösungsmittel sind die auf diesem Gebiet üblichen wie beispielsweise aliphatischen oder cyclischen Ether oder aromatischen Kohlenwasserstoffe mitverwendbar. Erfindungsgemäß bevorzugt werden aliphatische Kohlenwasserstoffe mit Siedepunkten ≥60 °C, vorzugsweise ≥80 °C, insbesondere im Bereich von 90 - 120 °C. Die Umsetzung wird zur Erzielung praxisgerechter Reaktionszeiten vorzugsweise beim Siedepunkt der Lösungsmittel, insbesondere zwischen 80 - 120 °C, durchgeführt. Die Konzentration des Reaktionsgemisches ist weitgehend unkritisch. Zur Erzielung hoher Raum-Zeit-Ausbeuten wird jedoch im oberen technisch möglichen Bereich gearbeitet.

Die so erhaltenen $(CpRa)_2Mg$-Verbindungen werden erfindungsgemäß bevorzugt direkt in zweiter Stufe mit den Verbindungen $X^1$-Q-$X^2$ nach der allgemeinen Reaktionsgleichung

$$(CpRa)_2Mg + X^1QX^2 \rightarrow (CpRa)_2Q + MgX^1X^2$$

zu den verbrückten Biscyclopentadienyl-Verbindungen umgesetzt.

Die zur Verbrückung einsetzbaren Komponenten $X^1QX^2$ sind die aus dem Stand der Technik bekannten Verbindungen (EP-A-0 480 390, EP-A-0 413 326, EP-A-0 530 908, EP-A-0 344 887). Erfindungsgemäß bevorzugt sind Verbindungen, in denen $X^1$, $X^2$ Cl, Br oder -O-Tosyl sind.

Die Reaktionsmischung der ersten Stufe wird gegebenenfalls vor Zugabe der Komponente $X^1QX^2$ bis unter deren Siedetemperatur abgekühlt und nach erfolgter Zugabe erneut bis auf Siedetemperatur erwärmt.

Gegebenenfalls können zur Erhöhung der Reaktionsgeschwindigkeit noch in maximal stöchiometrischer Menge, bezogen auf Magnesium, Ether wie vorzugsweise Alkylether mit insbesondere 6 bis 10 C-Atomen wie insbesondere Di-n-butylether mitverwendet werden.

Die Reaktionszeiten liegen üblicherweise zwischen 1 bis 3 Stunden.

Bei dem erfindungsgemäßen Verfahren werden in beiden Stufen die Edukte vorzugsweise in stöchiometrischen Mengen eingesetzt. Dadurch und durch die nahezu quantitative Umsetzung unter praxisgrechten Bedingungen fallen die verbrückten Biscyclopentadienyl-Verbindungen in solchen Reinheiten an, daß sie direkt ohne Aufarbeitung für weitere Umsetzungen verwendbar sind.

Beispiele für die nach dem erfindungsgemäßen Verfahren herstellbaren verbrückten Biscyclopentadienyl-Verbindungen sind Dimethylsilyl-bis(1-inden), Dimethylsilyl-bis(1-cyclopentadien), 2,2-Propyl-bis(1-inden), 2,2-Propyl-bis(trimethylcyclopentadien), 2,2-Propyl-bis(5-dimethylamino-1-inden), 2,2-Propyl-bis(6-dipropylamino-1-inden), 2,2-Propyl-bis(4,7-bis(dimethyl-amino-1-inden), 2,2-Propyl-bis(5-diphenylphosphino-1-inden), 2,2-Propyl-bis (4,5,6,7-tetrahydro-1-inden), 2,2-Propyl-bis(4-methyl-1-inden), 2,2-Propyl-bis(5-methyl-1-inden), 2,2-Propyl-bis (6-methyl-1-inden), 2,2-Propyl-bis(7-methyl-1-inden), 2,2-Propyl-bis(5-methoxy-1-inden), 2,2-Propyl-bis(4,7-dimethoxy-1-inden), 2,2-Propyl-bis(2,3-dimethyl-1-inden), 2,2-Propyl-bis(4,7-dimethyl-1-inden), 2,2-Propyl-bis(1-cyclopentadien), 2,2-Propyl-bis(1-inden), Diphenylmethyl-bis(1-inden), Diphenylmethyl-bis(1-cyclopentadien), Diphenylmethyl-bis(1-inden), Diphenylsilyl-bis(1-iden), Diphenylsilyl-bis(1-cyclopentadien), Diphenylsilyl-bis(1-inden), Ethylen-bis (1-inden), Ethylen-bis(trimethylcyclopentadien), Ethylen-bis(5-dimethylamino-1-inden), Ethylen-bis(6-dipropylamino-1-inden), Ethylen-bis(4,7-bis(dimethylamino)-1-inden), Ethylen-bis(5-diphenylphosphino-1-inden), Ethylen-bis (4,5,6,7-tetrahydro-1-inden), Ethylen-bis(4-methyl-1-inden), Ethylen-bis(5-methyl-1-inden), Ethylen-bis(6-methyl-1-inden), Ethylen-bis(7-methyl-1-inden), Ethylen-bis(5-methoxy-1-inden), Ethylen-bis(4,7-dimethoxy-1 -inden), Ethylen-bis (2,3-dimethyl-1-inden), Ethylen-bis(4,7-dimethyl-1-inden), Ethylen-bis(9-fluoren), Ethylen-bis(1-cyclopentadien), Ethylen-bis(1-inden).

Die Reaktionsmischung wird erfindungsgemäß bevorzugt ohne Isolierung des Reaktionsproduktes direkt in dritter Stufe erneut mit den Magnesiumverbindungen $(R^3R^4)_cMg$ der Stufe 1 in vorzugsweise stöchiometrischen Mengen unter den gleichen Reaktionsbedingungen wie in Stufe 1 zu den verbrückten Magnesiumverbindungen Q $(CpRa)_2Mg$ umgesetzt.

Zu dieser Reaktionsmischung wird bei Temperaturen zwischen ca. 20 bis 120 °C, vorzugsweise bei der Reaktionstemperatur der Stufe 3, eine Zinnverbindung der allgemeinen Formel $R^6_{4-k}SnX^3_k$ zudosiert.

In den Zinnverbindungen ist $R^6$ ein Alkylrest mit 2 - 20 C-Atomen, insbesondere 4 - 8 C-Atomen, $X^3$ ist ein Halogenrest, insbesondere Cl oder Br und k kann ein Wert von 1 bis 4 sein. Erfindungsgemäß bevorzugt sind Di-n-butyl-zinndichlorid, Tri-n-butyl-zinnchlorid, Tri-n-octyl-zinnchlorid, Di-n-octyl-zinndichlorid. Die Zinnverbindung wird vorzugsweise doppelt molar zur Magnesiumverbindung eingesetzt.

Nach Beendigung der Reaktion, je nach Reaktionstemperatur nach 1 bis 4 Stunden, werden nach Abkühlung auf Raumtemperatur sämtliche ausgefallenen Magnesiumsalze nach den üblichen Verfahren wie Dekantieren, Filtrieren, Zentrifugieren, abgetrennt.

Die feststofffreie organische Phase, welche als Reaktionsprodukt die Verbindung $Q(CpRa)_2(SnX^3_{k-1}{}^R6_{4-k})_2$ enthält, wird ohne weitere Aufarbeitung bei Raumtemperatur mit dem Übergangsmetallhalogenid $M(X)_m$, worin M ein Metall der Gruppe 3 bis 6 des Periodischen Systems der Elemente darstellt (IUPAC Notation), insbesondere Zr, Hf ist, X ein Halogenatom, insbesondere Cl, Br und m gleich der Oxidationszahl von M ist, versetzt und die Reaktion bei Raumtemperatur bis zur Siedetemperatur des verwendeten Lösungsmittels, vorzugsweise 20 - 120 °C, insbesondere 20 - 80 °C, durchgeführt. Die Reaktion ist im allgemeinen nach 1 bis 4 Stunden beendet.

Die Umsetzung der Stufe 5. kann zu stereoisomeren Verbindungen führen, welche in racemischer und mesomerer Form anfallen. Für die Herstellung von Katalysatoren für die Olefinpolymerisation sind die racemischen Verbindungen aufgrund ihrer höheren Aktivität und Stereoelektivität bevorzugt.

Anstelle der bei den gemäß Stand der Technik üblichen aufwendigen Verfahren zur Isolierung der Racemate kann bei dem erfindungsgemäßen Verfahren das Verhältnis auf einfache Weise allein durch die gewählten Konzentrationsverhältnisse gesteuert werden:

Je höher die Konzentration an Zinnverbindung, um so höher ist der Anteil an Racemat.

Zur Erreichung des gewünschten Verhältnisses an Racemat (rac) : meso-Verbindung wird das Lösungsmittel vor der Umsetzung mit dem Übergangsmetallhalogenid ganz oder teilweise, das heißt in der benötigten Menge, abdestilliert.

Erfindungsgemäß bevorzugt wird das Verfahren ohne Isolierung der Reaktionsprodukte der Stufen 1. bis 4. durchgeführt. Es ist jedoch ebenfalls möglich, die jeweiligen Zwischenprodukte vor der Umsetzung in der Folgestufe zu isolieren oder gegebenenfalls auf anderem Wege herzustellen und für die Folgestufe einzusetzen.

Im Falle der unsymmetrischen Verbindungen Q(CpRa)Cp'R'a'), in welchen CpRa ungleich Cp'R'a' ist, werden diese über literaturbekannte Verfahren hergestellt und beginnend in Stufe 3. weiter nach dem erfindungsgemäßen Verfahren zu den Metallocenen umgesetzt.

Erfindungsgemäß mitverwendbare unsymmetrische Verbindungen sind 2,2-Propyl-bis(1-inden)(1-cyclopentadien), 2,2-Propyl-bis(1-inden)(9-fluoren), Diphenylmethyl-bis(1-inden)(1-cyclopentadien), Diphenylmethyl-bis(1-inden)(9-fluoren), Diphenylsilyl-bis(1-inden)(1-cyclopentadien), Diphenylsilyl-bis(1-inden)(9-fluoren), Ethylen-bis(1-inden)(1-cyclopentadien), Ethylen-bis(1-inden)(9-fluoren).

<u>Beispiele</u>

Alle Versuche wurden unter Ausschluß von Sauerstoff und Feuchtigkeit unter Inertgas durchgeführt.

<u>Beispiel 1</u>

Darstellung von Ethylen-bis(inden-1-yl)zirkondichlorid :

a) Racemat (rac) : meso 1 : 1

Es wurde bei Raumtemperatur (RT) eine Mischung von 556 ml BOMAG®-A (0,486 mol; Butyloctylmagnesium der Firma Witco GmbH; 20 % ig in Heptan) und 126 ml Inden (90 %ig; 0,97 mol) hergestellt.

Anschließend wurde 4 h unter Rückfluß gerührt, bis das Aufhören der Gasentwicklung das Reaktionsende anzeigte.

Nach Abkühlen auf 70 °C wurden 41,9 ml (0,486 mol) 1,2-Dibromethan und 69 ml Di-n-butylether zudosiert. Erneut wurde 4 h refluxiert.

Vor der Zugabe von weiteren 556 ml BOMAG®-A wurde die Reaktionsmischung auf RT abgekühlt.

Anschließend folgten weitere 3 h Rückfluß.

Danach erfolgte die Zugabe von 264 ml (0,97 mol) Tri-n-butylzinnchlorid in die abgekühlte Mischung.

Unter Rückfluß innerhalb von 2 h wurde das Tri-butylzinn substituiert und Magnesiumchlorid eliminiert.

Nach Abtrennen der anorganischen Salze wurde die erhaltene klare Lösung mit 102 g $ZrCl_4$ (0,44 mol) versetzt, 1 h bei RT und 3 h bei 60 °C gerührt.

Mittels Filtration konnte man dann das Rohprodukt isolieren.

Ausbeute: 156 g Rohprodukt (85 % d. Th., bezogen auf $ZrCl_4$; rac : meso-Verhältnis 1 : 1).

Nach Auskochen mittels frischem Heptan und Ausrühren mit THF bei RT erhielt man 55 g (30 %) reine rac-Verbindung (I):

Ethylen(Indenyl)$_2$ZrCl$_2$:
$^1$H-NMR : ($CDCl_3$; 7,23 ppm)
7,68 - 7,13 (m, 8H, $C_6H_4$); 6,58 (d, 2H, a-$C_5H_2$); 6,2 (d, 2H, b-$C_5H_2$); 3,75 (s, 4H, -$CH_2CH_2$-)
Zr: ber.: 21,8 % gef.: 22,0 %;
Cl: ber.: 16,9 % gef.: 16,7 %

b) rac : meso 10 : 1

Die Reaktion wurde analog zu 1 a) durchgeführt, vor der Zugabe des $ZrCl_4$ wurde jedoch die Reaktionslösung destillativ vom Lösungsmittel befreit (bis 80 °C/1 Torr).
Man erhielt 147 g (80 %) Rohprodukt mit einem rac : meso-Verhältnis von 10 : 1.
Nach Aufreinigung konnten 110 g (60 %) reine rac-Verbindung isoliert werden.
($^1$H-NMR identisch mit dem in 1 a); Zr: 21,9 %; Cl: 16,6 %).

<u>Beispiel 2</u>

Darstellung von Ethylen-bis(inden-1-yl)hafniumdichlorid

a) rac : meso 2 : 1

Es wurden 85,2 ml Inden (94 %ig; 0,73 mol) vorgelegt, dem unter Rückfluß 416 ml BOMAG®-A (20 %ig in Heptan; 0,364 mol) zudosiert wurden. Es wurde 6 h refluxiert.
Bei 60 - 70 °C wurden 31,4 ml 1,2-Dibromethan (0,364 mol) und 50 ml Di-n-butylether zugegeben und man ließ 4 h unter Rückfluß nachreagieren.
Anschließend wurden erneut 416 ml BOMAG®-A (20 %ig in Heptan; 0,364 mol) eingetragen und 4 h unter Rückfluß gerührt.
Bei 80 °C erfolgte dann die Dosierung von 196 ml Tri-n-butylzinnchlorid (0,723 mol) mit nachfolgendem vierstündigen Refluxieren.
Anschließend wurden alle anorganischen Salze abgetrennt und das klare Filtrat weiter eingesetzt.
Bei 0 °C wurde in die Lösung $HfCl_4$ eingetragen (92,2 g; 0,288 mol). Es wurde langsam auf 60 °C erhitzt. Nach 30 min ging man dann auf Rückfluß und beließ die Reaktionsmischung 2 h dabei.
Nach Abkühlen auf RT wurde der ausgefallene Feststoff isoliert und getrocknet.
Es konnten 110 g (92 %) Rohprodukt (II) mit einem rac : meso-Verhältnis von ca. 2 : 1 isoliert werden.
Ausrührung mit Tetrahydrofuran (THF) lieferten schließlich 50,2 g (42 %) reines Racemat an (II).
rac-Ethylen(Indenyl)$_2$HfCl$_2$ (II):
$^1$H-NMR: ($CDCl_3$, 7,23 ppm)
7,65 - 7,1 (m, 8H, $C_6H_4$); 6,48 (d, 2H, a-$C_5H_2$); 6,09
(d, 2h, b-$C_5H_2$); 3,8 (s, 4H, -$CH_2CH_2$-)
Hf: ber.: 35,3 gef.: 35,8    Cl: ber.: 14,02 gef.: 13,9

b) rac: rein.

Es wurde analog zu 2 a) gearbeitet, lediglich nach der Umsetzung mit Tri-n-butylzinnchlorid und dem Entfernen der ausgefallenen anorganischen Salze wurde die Lösung destillativ unter Anlegen von Vakuum vom Lösungsmittel befreit.
Das nach Umsetzung mit $HfCl_4$ gewonnene Rohprodukt enthielt keine meso-Verbindung.
Nach Aufreinigung konnten mittels Filtration und Trocknung abschließend 73,5 g (61 % d. Th. ; bezogen auf $HfCl_4$) an reinem (II) erhalten werden.
$^1$H-NMR identisch mit dem in 3 a);
Hf: gef.: 35,5    Cl: gef.: 14,0

<u>Beispiel 3</u>

Darstellung von $Me_2$Si-bis (inden-1-yl)zirkondichlorid

a) rac : meso 1,1 : 1

55,7 ml Inden (95 %ig; 0,454 mol) und 50 ml Heptan wurden vorgelegt und innerhalb von 15 min unter Rückfluß

mit 260 ml BOMAG®-A (20 %ig in Heptan; 0,227 mol) versetzt. Nach 3 h Rückfluß wurde auf RT abgekühlt.

Man dosierte weiterhin 29,3 g Dimethydichlorsilan (0,227 mol), 39 ml Di-n-butylether und 25 ml Hexan zur Reaktionslösung und refluxierte 3 h.

Nach erneuter Zugabe von BOMAG® -A (260 ml; 0,227 mol), 4 h Kochen unter Rückfluß und Abkühlen auf RT wurden unter Rühren 123 ml Tri-n-butylzinnchlorid zudosiert (Temperaturanstieg auf 45 °C) und die Reaktion 4 h bei 50 °C weitergeführt.

Die ausgefallenen Salze wurden abgetrennt und das klare Filtrat wurde mit 47,6 g $ZrCl_4$ (0,204 mol) versetzt.

Es wurde 2 h bei RT und 1 h unter Rückfluß gerührt.

Nach Filtration und Trocknung erhielt man 79,7 g Rohprodukt (87 % d. Th.; bezogen auf $ZrCl_4$) mit einem rac : meso-Verhältnis von 1,1 : 1.

Aufreinigung ergab eine Ausbeute an reinem rac-Produkt (III) von 28,4 g (31 %).

rac-$Me_2Si(Indenyl)_2ZrCl_2$ (III):
$^1H$-NMR: ($CDCl_3$, 7,23 ppm)
7,62 - 7,03 (m, 8H, $C_6H_4$); 6,94 (d, 2H, a-$C_5H_2$); 6,1 (d, 2H, b-$C_5H_2$) 1,13 (s, 6 H, $Si(CH_3)_2$)
Zr: ber.: 20,3 % gef.: 20,3 %;
Cl: ber.: 15,8 % gef.: 15,7 %

b) reines Racemat:

522 ml BOMAG®-A (20 %ig; 456,6 mmol) wurden vorgelegt und auf Rückfluß erhitzt. Dann erfolgte innerhalb von 30 min die Zudosierung von 121 ml Inden (90 %ig; 931,2 mmol) mit anschließendem vierstündigem Refluxieren.

Bei RT wurden weiterhin 55,3 ml $Me_2SiCl_2$ (456 mmol), 80 ml Di-n-butylether und 40 ml Hexan hinzugefügt. 2 h Refluxieren schlossen sich an.

Nach Zugabe von 522 ml BOMAG®-A und 4 h Nachreaktion unter Rückfluß wurde bei RT Tri-n-butylzinnchlorid zudosiert (253 ml, 931 mmol) und 4 h bei 50 °C belassen.

Die Reaktionslösung wurde von den ausgefallenen Salzen befreit, und destillativ wurden flüchtige Bestandteile abgetrennt (bis 100 °C; 1 Torr).

In die viskose, klare Lösung wurden 98 g $ZrCl_4$ (420 mmol) bei 20 °C eingetragen. Es wurde 2 h bei 90 °C gerührt.

Man erhielt 149 g Rohprodukt (79 % d. Th.; bezogen auf $ZrCl_4$), das noch geringe Verunreinigungen, aber keine meso-Verbindung enthielt.

Nach Aufreinigung erhielt man 122 g reines rac- (III) (65 % d. Th.)
$^1H$-NMR identisch mit dem in 3 a)
Zr: gef.: 20,4 %   Cl: gef.: 15,6 %

<u>Beispiel 4</u>

Technische Darstellung von $Me_2Si(indenyl)_2ZrCl_2$:

In einem 150 l Reaktor wurden 7,95 kg Inden (90 %ig) vorgelegt und mit 27,05 kg BOMAG®-A (1,2 mol/kg) versetzt.

Nach Aufheizen bis auf Rückfluß (98 °C) wurde 3 h bei dieser Temperatur belassen, bis die Butangasentwicklung abgeschlossen war.

Eine Lösung von 4,24 kg Dichlordimethylsilan und 4,23 kg Di-n-butylether in 4 l Hexan wurde nun bei ca. 70 °C zu der erhaltenen Suspension dosiert. Es schlossen sich 2 h Nachreaktion unter Rückfluß an.

Sofort anschließend erfolgte die Zugabe von weiteren 27,05 kg BOMAG®-A mit anschließendem dreistündigem Refluxieren.

Danach wurden 21,14 kg Tri-n-butylzinnchlorid zudosiert und 3 h bei 50 °C gerührt.

Das ausgefallene Magnesiumsalz wurde mittels Filtration abgetrennt und das Filtrat vom Lösungsmittel befreit.

Die verbleibende viskose Lösung wurde bei RT startend mit 6,96 kg Zirkontetrachlorid versetzt und noch 3 h refluxiert.

Das Rohprodukt wurde anschließend mittels Filtration isoliert (reine rac-Verbindung; keine meso-Verbindung nachweisbar; Rohausbeute 90 %).

Zur weiteren Aufreinigung wurde das Produkt noch mittels THF ausgerührt, so daß man letztendlich 75 % (9,8 kg) sauberes rac-$Me_2SiIndenyl_2ZrCl_2$ erhielt.

Beispiel 5

Darstellung von $Me_2Si$-bis(inden-1-yl)hafniumdichlorid:

a) rac : meso 2 : 1

Es wurden 148,6 ml BOMAG®-A (20 %ig in Heptan; 130 mmol) und 33,8 ml Inden (90 %ig; 260 mmol) zusammengemischt und 4 h refluxiert.
Anschließend wurden 15,8 ml $Me_2SiCl_2$ (130 mmol), 20 ml Hexan und 20 ml Di-n-butylether bei 20 °C zugesetzt. Danach wurde 3 h refluxiert.
Die so erhaltene Reaktionsmischung wurde erneut mit 148,6 ml BOMAG®-A versetzt und 3 h refluxiert, bevor 70,5 ml Tri-n-butylzinnchlorid (260 mmol) bei RT zudosiert und die Reaktion weitere 3 h bei 50 °C unter Rühren weitergeführt wurde.
Nach Entfernen der ausgefallenen Feststoffe versetzte man die erhaltene klare Lösung mit 37,5 g $HfCl_4$ (117 mmol) und refluxierte 2 h.
Mittels Filtration erhielt man 44,5 g Rohprodukt (IV) (71 % d. Th., bezogen auf $HfCl_4$) mit einem rac : meso-Verhältnis von 2 : 1.
$Me_2Si(Indenyl)_2HfCl_2$ (IV)
$^1H$-NMR: ($CDCl_3$, 7,23 ppm)
7,58 - 7,03 (m, 8H, $C_6H_4$); 6,8 (d, 2H, $C_5H_2$); 6,05 (d, 2H, $C_5H_2$); 1,1 (s, 6H, $Si(CH_3)_2$)
Hf: ber.: 33,3 % gef.: 33,6 % ;
Cl: ber.: 13,2 % gef.: 13,0 %

b) reines Racemat:

Es wurde analog zu Versuch 5 a) gearbeitet, wobei als Variation die Reaktionslösung vor Zusatz des $HfCl_4$ von dem Lösungsmittel befreit wurde (bis zu 120 °C/1 Torr).
Man erhielt ein meso-freies Rohprodukt, das nach Aufreinigung 43,9 g (70 % d. Th.) reines rac-Metallocen (IV.) lieferte.
$^1H$-NMR identisch mit dem in 6 a)
Hf: gef.: 33,4 % ; Cl: gef.: 13,3 %

Beispiel 6

Einsatz weiterer Dialkymagnesiumverbindungen:

a) Ansatz 3 a) wurde wiederholt, anstelle von BOMAG®-A wurde jedoch Dibutylmagnesium (1 molar in Heptan) eingesetzt. Dabei wurden die Refluxionszeiten bei der Umsetzung des Dialkylmagnesiums jeweils um 30 min verlängert.
Man erhielt 68 g Rohprodukt $Me_2Si(Indenyl)_2ZrCl_2$ (mit einem rac : meso-Verhältnis von 1 : 1).

b) Ansatz 3 a) wurde mit Dihexylmagnesium (1 molar in Heptan) durchgeführt.
Man erhielt 70 g Rohprodukt $Me_2Si(Indenyl)_2ZrCl_2$ (mit einem rac : meso-Verhältnis von 1 : 1).

Beispiel 7

Isolieren und Charakterisieren der Zwischenstufe $EthylenIndenyl_2$(tri-n-butylzinn)$_2$:
10 g Inden (95 %ig; 82 mmol) wurden mit 34,2 g BOMAG®-A (20 %ig in Heptan; 41 mmol) versetzt und 4 h lang unter Rückfluß erhitzt.
Dann wurden bei Raumtemperatur 7,7 g (41 mmol) 1,2 Dibromethan und 5,3 g (41 mmol) n-$Butyl_2O$ zugegeben und erneut 3 h unter Rückfluß gerührt.
Anschließend wurde das ausgefallene $MgBr_2$ mittels Filtration abgetrennt.
Das Filtrat wurde mit 34,2 g BOMAG®-A (20 %ig in Heptan; 41 mmol) versetzt und 4 h refluxiert.
Anschließend wurden bei 50 °C 26,8 g (82 mmol) Tri-n-butylzinnchlorid zugegeben und weitere 2 h refluxiert.
Das ausgefallene $MgCl_2$ wurde durch Filtration abgetrennt und das Filtrat zur Trockene eingeengt (bis 100 °C/0,1 mbar).

Man erhielt $EtIndenyl_2TBT_2$ in Form eines viskosen Öls in quantitativer Ausbeute.

$^1$H-NMR: ($CDCl_3$) 7,55 (m, 2H); 7,45 (m, 2H); 7,3 - 7,1 (m, 4H); 6,5 (d, 2H); 4,02 (m, 2H); 3,02 (s, 4H); 1,7 - 1,1 (m, 36 H); 0,9 - 0,7 (m, 8 H).

Beispiel 8

Isolieren und Charakterisieren der Zwischenverbindung $Me_2SiIndenyl_2TBT_2$ (TBT = Tri-n-butylzinn)

12,2 g Inden (95 %ig; 0,1 mol) wurden mit 42 g BOMAG® -A (20 %ig in Heptan; 50 mmol) versetzt und 4 h refluxiert.
Anschließend wurden bei Raumtemperatur 6,45 g $Me_2SiCl_2$ (50 mmol) und 6,5 g n-$Butyl_2O$ (50 mmol) zugesetzt und 2 h erneut refluxiert.
Weiterhin wurden 100 mmol (32,8 g) Tri-n-butylzinnchlorid zugefügt, 2 h unter Rückfluß gerührt, abgekühlt, filtriert und das Filtrat zur Trockene eingeengt (100 °C/0,1 mbar).
Man erhielt $Me_2SiIndenyl_2TBT_2$ als ein viskoses Öl in quantitativer Ausbeute.

$^1$H-NMR: ($CDCl_3$) 7,6 - 7,3 (m ); 7,2 - 6,9 (m, ); 4,25 (s, 2H); 1,8 - 1,1 (m, 36 H); 0,9 - 0,7 (m, 18 H); 0,5 (s, 6 H).

Beispiel 9

a) Isolieren und Charakterisieren der Verbindung $Me_2Si[(Me_4Cp)(^tBUN)]$(tri-n-butylzinn)$_2$:

13,25 g (= 53 mmol) $Me_2Si[(Me_4CpH)(^tBuNH)]$ (Literatur: (Organometallics, 1990, 9, 867) wurden in 63,6 ml BOMAG®-A (53 mmol) gegeben und 3 h refluxiert.
Anschließend wurde die Lösung auf -40 °C gekühlt und der ausgefallene Feststoff isoliert (13,9 g).
$Me_2Si[(Me_4Cp)(^tBuN)]Mg$:

$^1$H-NMR: (DMSO) 1,99 (s, 6 H, b-$Me_2Cp$); 1,79 (s, 6 H, a-$Me_2Cp$); 1,09 (s, 9 H, $Me_3C$); 0,12 (s, 6 H, $SiMe_2$)

10 g $Me_2Si[(Me_4Cp)(^tBuN)]Mg$ (36,5 mmol) wurden in 50 ml Xylol gelöst und mit Tri-n-butylzinnchlorid versetzt (73 mmol; 23,8 g) und 5 h refluxiert.
Von der nach Filtration erhaltenen Lösung wurde das Xylol abgezogen und das verbleibende viskose Öl mittels NMR-Spektroskopie analysiert:

$^1$H-NMR: ($CDCl_3$) 1,98 (s, 6 H, a-$Me_2Cp$); 1,82 (s, 6 H, $Me_2Cp$); 1,7 - 1,6 (m , 12 H, Sn-$CH_2$-); 1,43 - 1,1 (m, 24 H, -$CH_2CH_2$-);
1,06 (s, 9 H, $Me_3C$); 0,95 (t, 18 H, $H_3C$-); 0,09 (s, 6 H, $Me_2Si$).

**Patentansprüche**

**1.** Verfahren zur Herstellung von verbrückten, stereorigiden Metallocenen der allgemeinen Formel (1)

$$Q(CpRa)(Cp'R'a')M(X)_n \qquad (1)$$

worin

Cp = ein Cyclopentadienyl-, ein Indenyl-, ein Fluorenylrest
R, R' = Alkyl-, Phosphin-, Amin-, Alkylether- oder Aryl-ethergruppen mit $0 \leq a \leq 4$, $0 \leq a' \leq 4$
Cp' = eine der Gruppen Cp oder
Cp' = NR" mit R" = Alkyl- oder Arylrest mit a = 1 und
Q = eine ein- oder mehrgliedrige Brücke

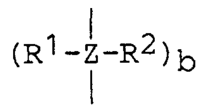

zwischen Cp und Cp' ist, worin $R^1$ und $R^2$ gleich oder verschieden ein Wasserstoffatom, eine $C_1$-$C_{10}$-Alkylgruppe, eine $C_6$-$C_{10}$-Arylgruppe und Z Kohlenstoff, Silizium oder Germanium bedeutet mit b = 1, 2 oder 3

M = ein Übergangsmetall der Gruppen 3 bis 6, ins besondere Zr, Hf ist
X = Halogen, insbesondere Cl, Br ist und
n = der Oxidationszahl von M, vermindert um 2, entspricht,

**dadurch gekennzeichnet, daß** in erster Stufe

1) Cyclopentadienylverbindungen CpRa mit Magnesiumverbindungen $(R^3R^4)_cMg$, worin $R^3R^4$ gleich oder verschieden, H, $C_1$-$C_{12}$-Alkylreste und c = 0 oder 1 ist, nach der allgemeinen Gleichung umgesetzt werden

$$2CpRa + (R^3R^4)_cMg \rightarrow (CpRa)_2Mg + (cR^3H) + (cR^4H)$$

und das Reaktionsprodukt in zweiter Stufe

2) mit Verbindungen $X^1QX^2$, worin $X^1$, $X^2$ gleich oder verschieden Cl, Br, J, $-OSO_2R^5$ mit $R^5$ ein Alkylrest mit 1 - 10 C-Atomen oder ein Arylrest mit 6 - 10 C-Atomen sein kann, nach der allgemeinen Gleichung umgesetzt wird

$$(CpRa)_2Mg + X^1QX^2 \rightarrow (CpRa)_2Q + MgX^1X^2$$

und das Reaktionsprodukt in dritter Stufe

3) mit Magnesiumverbindungen $(R^3R^4)_cMg$ nach der allgemeinen Gleichung umgesetzt wird

$$(CpRa)_2Q + (R^3R^4)_cMg \rightarrow Q(CpRa)_2Mg + (cR^3)H + (cR^4)H$$

oder

$$(CpRa)(Cp'R'a')Q + (R^3R^4)_cMg \rightarrow Q(CpRa)(Cp'R'a')Mg + (cR^3)H + (cR^4)H$$

und das Reaktionsprodukt in vierter Stufe

4) mit Zinnverbindungen $R^6_{4-k}SnX^3_k$, worin $R^6$ ein $C_2$-$C_{20}$-Alkylrest, insbesondere $C_4$-$C_8$-Alkylrest oder ein $C_6$-$C_{10}$-Arylrest ist, $X^3$ ein Halogenatom, insbesondere Cl, Br und k = 1 - 4 ist, nach der allgemeinen Gleichung

$$Q(CpRa)_2Mg + 2\,R^6_{4-k}SnX^3_k \rightarrow Q(CpRa)_2(SnX^3_{k-1}R^6_{4-k})_2 + MgX^3 2$$

oder

$$Q(CpRa)(Cp'R'a')Mg + 2\,R^6_{4-k}SnX^3_k \rightarrow$$

$$Q(CpRa)\ (Cp'R'a')\ (SnX^3{}_{k-1}R^6{}_{4-k})_2 + MgX^3 2$$

umgesetzt wird und das Reaktionsprodukt in fünfter Stufe

5) mit Übergangsmetallhalogeniden der Formel $M(X)_m$, worin m gleich der Oxidationszahl von M ist, nach der Gleichung

$$Q(CpRa)_2(SnX^3{}_{k-1}R^6{}_{4-k})_2 + M(X)_m \rightarrow$$

$$Q(CpRa)_2M(X)_n + 2SnX^3{}_{k-1}XR^6{}_{4-k}$$

oder

$$Q(CpRa)(Cp'R'a)(SnX^3{}_{k-1}R^6{}_{4-k})_2 + M(X)_m \rightarrow$$

$$Q(CpRa)(Cp'R'a')M(X)n + 2SnX^3{}_{k-1}XR^6{}_{4-k}$$

umgesetzt wird.

2. Verfahren gemäß Anspruch 1, **dadurch gekennzeichnet, daß** in der Stufe 4. enthaltene Lösungsmittel vor Umsetzung mit dem Übergangsmetallhelogenid in der Stufe 5. ganz oder teilweise entfernt wird.

3. Verfahren gemäß Anspruch 1, **dadurch gekennzeichnet, daß** die Reaktionsprodukte der Zwischenstufen ohne Isolierung direkt für die weitere Umsetzung der jeweiligen Folgestufen eingesetzt werden.

4. Verbindungen der allgemeinen Formel

$$Q(CpRa)\ (Cp'R'a')\ (SnX^3{}_{k-1}R^6{}_{4-k})_2$$

worin bedeuten

Q = eine ein- oder mehrgliedrige strukturelle Brücke

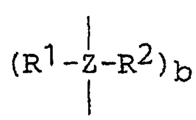

zwischen Cp und Cp' ist, worin $R^1$ und $R^2$ gleich oder verschieden ein Wasserstoffatom, eine $C_1$-$C_{10}$-Alkylgruppe, eine $C_6$-$C_{10}$-Arylgruppe und Z Kohlenstoff, Silizium oder Germanium bedeutet mit b = 0,1, 2 oder 3

Cp, Cp' = Cyclopentadienyl-, ein Indenyl-, ein Fluorenylrest

R, R' = Alkyl-, Phosphin-, Amin- Alkylether-, oder Arylethergruppen mit $0 \leq a, a' \leq 4$

$R^6$ = ein $C_2$-$C_{20}$-Alkylrest, ein $C_6$-$C_{10}$-Arylrest

$X^3$ = ein Halogenatom

Z = Kohlenstoff, Silizium oder Germanium mit b = 1, 2 oder 3.

## Claims

1. Process for preparing bridged, stereorigid metallocenes of the general formula (1)

$$Q(CpRa)(Cp'R'a')M(X)_n \quad (1)$$

where

Cp = a cyclopentadienyl, an indenyl, a fluorenyl radical
R, R' = alkyl, phosphine, amine, alkyl ether or aryl ether groups with $0 \le a \le 4$, $0 \le a' \le 4$
Cp' = one of the groups Cp or
Cp' = NR" with R" = alkyl or aryl radical with a = 1 and
Q = a single-membered or multi-membered bridge

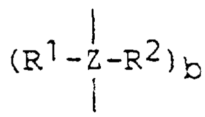

between Cp and Cp', where $R^1$ and $R^2$ are identical or different and are a hydrogen atom, a $C_1$-$C_{10}$-alkyl group, a $C_6$-$C_{10}$-aryl group and Z is carbon, silicon or germanium and b = 1, 2 or 3
M = a transition metal of the groups 3 to 6, in particular Zr, Hf
X = halogen, in particular Cl, Br and
n = the oxidation state of M reduced by 2,

**characterized in that**, in a first step,

1) Cyclopentadienyl compounds CpRa are reacted with magnesium compounds $(R^3R^4)_cMg$, where $R^3R^4$ are identical or different H, $C_1$-$C_{12}$-alkyl radicals and c = 0 or 1 in accordance with the general equation

$$\mathbf{2CpRa + (R^3R^4)_cMg \rightarrow (CpRa)_2Mg + (cR^3H) + (cR^4H)}$$

and the reaction product, in a second step,

2) is reacted with compounds $X^1QX^2$, where $X^1$, $X^2$ are identical or different and are Cl, Br, I, $-OSO_2R^5$, where $R^5$ can be an alkyl radical having 1 - 10 carbon atoms or an aryl radical having 6 - 10 carbon atoms, in accordance with the general equation

$$\mathbf{(CpRa)_2Mg + X^1Qx^2 \rightarrow (CpRa)_2Q + MgX^1X^2}$$

and the reaction product, in a third step,

3) is reacted with magnesium compounds $(R^3R^4)_cMg$ in accordance with the general equation

$$\mathbf{(CpRa)_2Q + (R^3R^4)_cMg \rightarrow Q(CpRa)_2Mg + (cR^3)_H + (cR^4)_H}$$

or

$$(CpRa)(Cp'R'a')Q + (R^3R^4)_cMG \rightarrow Q(CpRa)\,(Cp'R'a')Mg+$$

$$(cR^3)H + (cR^4)H$$

and the reaction product, in a fourth step

4) is reacted with tin compounds $R^6_{4-k}\ SnX^3_k$, where R° is a $C_2$-$C_{20}$-alkyl radical, in particular a $C_4$-$C_8$-alkyl

radical, or a $C_6$-$C_{10}$-aryl radical, $X^3$ is a halogen atom, in particular Cl, Br, and k = 1 - 4, in accordance with the general equation

$$\mathbf{Q(CpRa)_2Mg + 2\ R^6{}_{4-k}SnX^3{}_k \rightarrow}$$
$$\mathbf{Q(CpRa)_2(SnX^3{}_{k-1}R^6{}_{4-k})_2 + MgX^3 2}$$

or

$$Q(CpRa)(Cp'R'a')Mg + 2\ R^6{}_{4-k}SnX^3{}_k \rightarrow$$
$$Q(CpRa)(Cp'R'a')(SnX^3{}_{k-1}R^6{}_{4-k})_2 + MgX^3{}_2$$

and the reaction product, in a fifth step,

5) is reacted with transition metal halides of the formula $M(X)_m$, where m is equal to the oxidation state of M, in accordance with the equation

$$Q(CpRa)_2(SnX^3{}_{k-1}R^6{}_{4-k})_2 + M(X)_m \rightarrow$$
$$Q(CpRa)_2M(X)_n + 2SnX^3{}_{k-1}XR^6{}_{4-k}$$

or

$$Q(CpRa)\ (Cp'R'a)\ (SnX^3{}_{k-1}R^6{}_{4-k})_2 + M(X)_m \rightarrow$$
$$Q\ (CpRa)\ (Cp'R'a')M(X)n + 2SnX^3{}_{k-1}XR^6{}_{4-k}$$

**2.** Process according to Claim 1, **characterized in that** the solvent present in the step 4 is completely or partially removed prior to reaction with the transition metal halide in the step 5.

**3.** Process according to Claim 1, **characterized in that** the reaction products of the intermediate steps are used directly without isolation for the further reaction of the respective subsequent steps.

**4.** Compounds of the general formula

$$Q(CpRa)\ (Cp'R'a')\ (SnX^3{}_{k-1}R^6{}_{4-k})_2$$

where

Q = a single-membered or multi-membered structural bridge

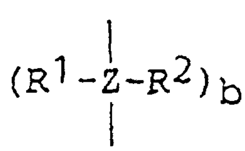

between Cp and Cp'$_3$ where $R^1$ and $R^2$ are identical or different and are a hydrogen atom, a $C_1$-$C_{10}$-alkyl group, a $C_6$-$C_{10}$-aryl group and Z is carbon, silicon or germanium and b=1, 2 or 3

Cp, Cp' = cyclopentadienyl, an indenyl, a fluorenyl radical

R, R' = alkyl, phosphine, amine, alkyl ether, or aryl ether groups with $0 \leq a, a' \leq 4$
$R^6$ = a $C_2$-$C_{20}$-alkyl radical, a $C_6$-$C_{10}$-aryl radical
$X^3$ = a halogen atom
Z = carbon, silicon or germanium and b=1, 2 or 3.

## Revendications

**1.** Procédé pour la préparation de métallocènes stéréorigides pontés de formule générale (1)

$$Q(CpRa)(Cp'R'a')M(X)_n \quad (1)$$

dans laquelle

Cp représente un radical cyclopentadiényle, indényle, fluorényle,
R, R' représentent des groupes alkyle, phosphino, amino, alkyléther ou aryléther avec $0 \leq a \leq 4$, $0 \leq a' \leq 4$,
Cp' représente un des groupes Cp ou
Cp' représente NR" avec R" = un radical alkyle ou aryle avec a = 1 et
Q est un pont à un ou plusieurs chaînons

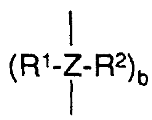

entre Cp et Cp', dans lequel $R^1$ et $R^2$, identiques ou différents, représentent chacun un atome d'hydrogène ou un groupe alkyle en $C_1$-$C_{10}$, un groupe aryle en $C_6$-$C_{10}$ et Z représente un atome de carbone, de silicium ou de germanium, avec b = 1, 2 ou 3,
M est un métal de transition des groupes 3 à 6, en particulier Zr, Hf,
X est un atome d'halogène, en particulier Cl, Br, et
n correspond au nombre d'oxydation de M, diminué de 2,

**caractérisé en ce que**, dans la première étape

1) on fait réagir des composés cyclopentadiényle CpRa avec des composés contenant du magnésium $(R^3R^4)_cMg$, dans lesquels $R^3R^4$ sont identiques ou différents et représentent H ou des radicaux alkyle en $C_1$-$C_{12}$ et c = 0 ou 1, selon l'équation générale

$$2CpRa + (R^3R^4)_cMg \rightarrow (CpRa)_2Mg + (cR^3H) + (cR^4H)$$

et, dans une deuxième étape,
2) on fait réagir le produit de réaction avec des composés $X^1QX^2$, dans lesquels $X^1$, $X^2$ sont identiques ou différents et représentent Cl, Br, I, un groupe $-OSO_2R^5$ dans lequel $R^5$ peut être un radical alkyle ayant de 1 à 10 atomes de carbone ou un radical aryle ayant de 6 à 10 atomes de carbone, selon l'équation générale

$$(CpRa)_2Mg + X^1QX^2 \rightarrow (CpRa)_2Q + MgX^1X^2$$

et, dans une troisième étape,
3) on fait réagir le produit de réaction avec des composés contenant du magnésium $(R^3R^4)_cMg$, selon l'équation générale

$$(CpRa)_2Q + (R^3R^4)_cMg \rightarrow Q(CpRa)_2Mg + (cR^3)H + (cR^4)H$$

ou

$$(CpRa)(Cp'R'a')Q + (R^3R^4)_cMg \rightarrow Q(CpRa)(Cp'R'a')Mg + (cR^3)H + (cR^4)H,$$

et, dans une quatrième étape,
4) on fait réagir le produit de réaction avec des composés stanniques $R^6_{4-k}SnX^3_k$, dans lesquels $R^6$ est un radical alkyle en $C_2$-$C_{20}$, en particulier un radical alkyle en $C_4$-$C_8$, ou un radical aryle en $C_6$-$C_{10}$, $X^3$ est un atome d'halogène, en particulier Cl, Br, et k = 1 - 4, selon l'équation générale

$$Q(CpRa)_2Mg + 2\,R^6{}_{4-k}SnX^3{}_k \rightarrow Q(CpRa)_2(SnX^3{}_{k-1}R^6{}_{4-k})_2 + MgX^3{}_2$$

ou

$$Q(CpRa)\,(Cp'R'a')Mg + 2\,R^6{}_{4-k}SnX^3{}_k \rightarrow Q(CpRa)\,(Cp'R'a')\,(SnX^3{}_{k-1}R^6{}_{4-k})_2 + MgX^3{}_2$$

et, dans une cinquième étape,
5) on fait réagir le produit de réaction avec des halogénures de métaux de transition de formule $M(X)_m$, dans laquelle m est égal au nombre d'oxydation de M, selon l'équation

$$Q(CpRa)_2(SnX^3{}_{k-1}R^6{}_{4-k})_2 + M(X)_m \rightarrow Q(CpRa)_2M(X)_n + 2SnX^3{}_{k-1}XR^6{}_{4-k}$$

ou

$$Q(CpRa)(Cp'R'a)(SnX^3{}_{k-1}R^6{}_{4-k})_2 + M(X)_m \rightarrow Q(CpRa)(Cp'R'a')M(X)_n + 2SnX^3{}_{k-1}XR^6{}_{4-k}.$$

2. Procédé selon la revendication 1, **caractérisé en ce que** le solvant contenu dans l'étape 4 est partiellement ou totalement éliminé avant la réaction avec l'halogénure de métal de transition dans l'étape 5.

3. Procédé selon la revendication 1, **caractérisé en ce que** les produits de réaction des étapes intermédiaires sont utilisés directement, sans isolement, pour la réaction ultérieure des étapes suivantes respectives.

4. Composé de formule générale

$$Q(CpRa)(Cp'R'a')(S_nX^3{}_{k-1}R^6{}_{4-k})_2$$

dans laquelle

Q est un pont structural à un ou plusieurs chaînons

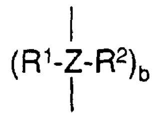

entre Cp et Cp', dans lequel $R^1$ et $R^2$, identiques ou différents, représentent chacun un atome d'hydrogène ou un groupe alkyle en $C_1$-$C_{10}$, un groupe aryle en $C_6$-$C_{10}$ et Z représente un atome de carbone, de silicium ou de germanium, avec b = 0, 1, 2 ou 3,
Cp, Cp' représentent un radical cyclopentadiényle, indényle, fluorényle,
R, R' représentent des groupes alkyle, phosphino, amino, alkyléther ou aryléther avec $0 \leq a, a' \leq 4$,
$R^6$ représente un radical alkyle en $C_2$-$C_{20}$, un radical aryle en $C_6$-$C_{10}$,
$X^3$ représente un atome d'halogène,
Z représente un atome de carbone, de silicium ou de germanium, avec b = 1, 2 ou 3.